# FASCICULE DE BREVET EUROPEEN

(11) **EP 1 496 601 B1**
(45) Date de publication et mention de la délivrance du brevet: **29.07.2009**
(21) Numéro de dépôt: 04291596.7
(22) Date de dépôt: 24.06.2004
(51) Int. Cl.: H02K 7/102

(54) **Système de freinage à reprise de couple sécurisée**
Bremssystem mit sicherer Drehmomentaufnahme
Braking system with secured transfer of braking torque

(30) Priorité: 08.07.2003 FR 0308362
(43) Date de publication de la demande: 12.01.2005
(73) Titulaire: MOTEURS LEROY-SOMER, 16000 Angouleme (FR)
(72) Inventeur: Carriot, Pascal, 16400 La Couronne (FR)
(74) Mandataire: Tanty, François

(56) Documents cités:
- EP-A- 0 298 403
- DE-B- 1 292 735
- FR-A- 2 037 238
- PATENT ABSTRACTS OF JAPAN vol. 2000, no. 05, 14 septembre 2000 (2000-09-14) -& JP 2000 035064 A (TABUCHI TEC KK), 2 février 2000 (2000-02-02)

## Description

La présente invention concerne les systèmes de freinage pour moteurs électriques et notamment ceux destinés aux moteurs entraînant des ascenseurs ou autres systèmes de levage.

Des systèmes de freinage sont connus qui comportent des freins électromécaniques comprenant chacun un disque de frein solidaire de l'arbre du moteur et pourvu de garnitures de friction et une armature mobile sous l'effet d'un électroaimant. En l'absence d'excitation de ce dernier, l'armature est plaquée contre les garnitures de friction par des ressorts et un couple de freinage s'exerce sur le disque, et par réaction sur le frein et le châssis qui le supporte.

Un système de freinage suivant le préambule de la revendication 1 est connu par le document DE-B-1 292 735.

Les freins sont conventionnellement assemblés par boulonnage sur le châssis, le couple de freinage étant repris par le châssis par la friction due au serrage des boulons.

Les assemblages vissés offrent une dispersion importante qui oblige à surdimensionner le système de freinage en utilisant plus de vis et/ou des matériaux plus résistants, ce qui se répercute sur le coût.

Il existe un besoin pour disposer d'un système de freinage présentant la sécurité requise, tout en permettant sa fabrication à un moindre coût.

L'invention a ainsi pour objet un système de freinage pour moteur électrique selon la revendication 1.

Un tel système de freinage permet une reprise fiable et sûre du couple de freinage sans avoir à surdimensionner le frein, en faisant jouer aux entretoises une fonction supplémentaire, à savoir la transmission du couple de freinage.

Chaque entretoise est vissée dans une culasse du frein, ce qui permet de régler le débattement axial de l'armature, cette dernière venant en l'absence d'alimentation de l'électroaimant en appui, sous l'effet des ressorts, contre une tête de l'entretoise, laquelle peut présenter une forme hexagonale de façon à faciliter son vissage ou son dévissage.

Le frein peut notamment comporter trois entretoises comportant chacune une extrémité engagée dans un logement correspondant du châssis, de manière à permettre une reprise par le châssis du couple s'exerçant sur le frein lors du freinage.

Dans une réalisation particulière, l'armature comporte au moins une ouverture oblongue, allongée dans le sens radial, traversée par une entretoise correspondante. Cette ouverture oblongue peut notamment déboucher à la circonférence de l'armature. La présence de l'ouverture oblongue facilite la mise en place de l'armature sur l'entretoise et permet de réaliser le système de freinage avec des tolérances de fabrication plus grandes, donc à un moindre coût.

Avantageusement, le système de freinage comporte un deuxième frein juxtaposé au premier, comportant comme ce dernier un disque de frein relié par une liaison cannelée à l'arbre entraîné par le moteur, une armature mobile en translation selon l'axe de rotation de l'arbre, des entretoises de guidage de l'armature, des ressorts pour solliciter l'armature contre le disque et un électroaimant pour, lorsqu'alimenté, attirer l'armature et l'éloigner du disque contre l'action des ressorts.

Les entretoises de ce deuxième frein peuvent, le cas échéant, être engagées à une extrémité dans un logement correspondant de la culasse du premier frein, de façon à permettre une reprise par cette culasse du couple s'exerçant sur le deuxième frein lors du freinage.

Le système de freinage peut comporter des tiges filetées traversant les entretoises et maintenant les deux freins en compression l'un contre l'autre. Ces tiges filetées peuvent notamment se visser à une extrémité dans le châssis et permettre le vissage, à l'extrémité opposée, d'écrous venant prendre appui sur la culasse du deuxième frein.

Cette dernière comporte un logement permettant de recevoir une extrémité de l'arbre entraîné par le moteur, et ce logement peut être obturé à une extrémité par un bouchon permettant de réduire le bruit de fonctionnement du système de freinage.

L'invention pourra être mieux comprise à la lecture de la description détaillée qui va suivre, d'exemples non limitatifs de celle-ci, et à l'examen du dessin annexé, sur lequel :
- la figure 1 représente en coupe axiale, schématique et partielle, un système de freinage réalisé conformément à l'invention,
- la figure 2 est une demi-vue de face du frein de gauche de la figure 1, le châssis étant enlevé,
- la figure 3 représente isolément, en coupe axiale, une entretoise du frein de gauche de la figure 1,
- la figure 4 est une vue en élévation de l'entretoise de la figure 3,
- la figure 5 représente en vue de face, isolément, l'armature du frein de gauche de la figure 1, et
- la figure 6 représente, de manière partielle et schématique, un détail d'une variante de réalisation du système de freinage.

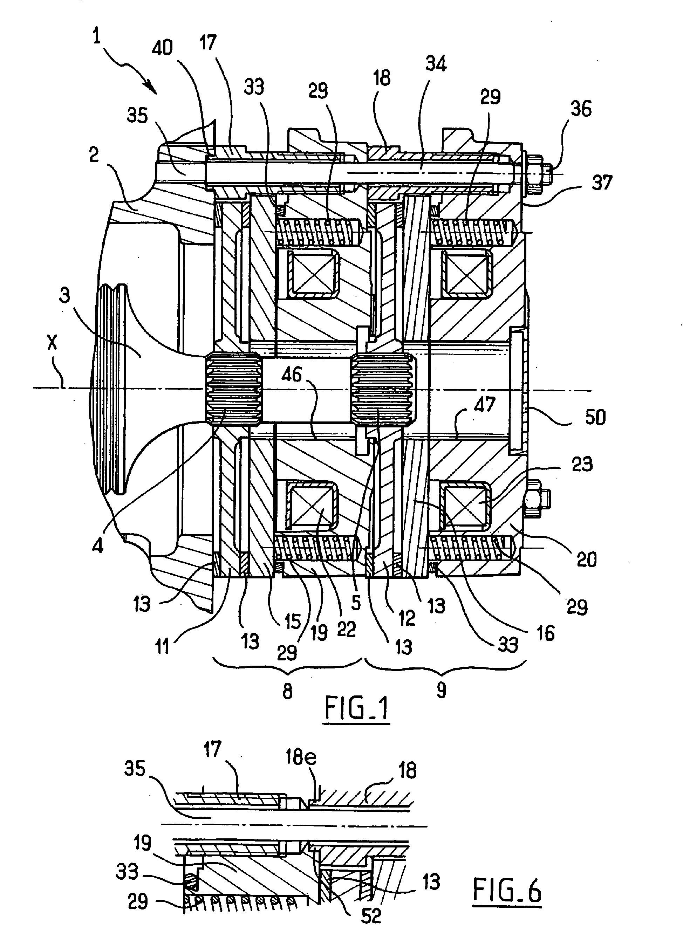

Le système de freinage 1 représenté à la figure 1 comporte un châssis 2, partiellement représenté, solidaire d'un bâti non apparent. A l'intérieur du châssis 2 tourne un arbre 3 d'axe X, comportant une poulie d'entraînement d'un câble d'ascenseur. Cet arbre 3 comporte à une extrémité deux parties cannelées 4 et 5.

Le système de freinage comporte également, dans l'exemple considéré, deux freins 8 et 9 comportant des disques de frein respectifs 11 et 12 pourvus de moyeux pouvant coulisser sur les portions cannelées respectives 3 et 4, selon l'axe X de l'arbre, tout en tournant avec celui-ci.

Les disques de frein 11 et 12 sont pourvus à leur périphérie et sur leurs deux faces de garnitures de friction 13.

Les freins 8 et 9 comportent des armatures mobiles respectives 15 et 16, lesquelles sont guidées dans leur déplacement en translation selon l'axe X par des entretoises 17 pour le premier frein et 18 pour le deuxième, ces entretoises 17 et 18 étant vissées dans des culasses respectives 19 et 20 des freins 8 et 9.

Des électroaimants 22 et 23 logés respectivement dans les culasses 19 et 20 des freins 8 et 9 permettent d'attirer les armatures correspondantes 15 et 16 lorsqu'alimentés électriquement, auquel cas les disques de frein associés auxdites armatures peuvent tourner sans freiner sensiblement la rotation de l'arbre 2.

Des ressorts 29 sont disposés dans des logements des culasses 19 et 20 pour plaquer les armatures 15 et 16 contre les disques de frein correspondants 11 et 12 en l'absence d'alimentation des électroaimants 22 et 23, de sorte que les garnitures de friction 13 frottent alors contre l'armature 15 et le châssis 2 pour le premier frein 8 et contre l'armature 16 et la culasse 19 pour le deuxième frein, exerçant ainsi un couple de freinage sur l'arbre 3.

Un joint torique 33 est disposé sur chaque culasse 19 ou 20 pour s'interposer élastiquement avec l'armature correspondante lors de l'alimentation de l'électroaimant associé, afin de réduire les vibrations et le bruit de fonctionnement du frein.

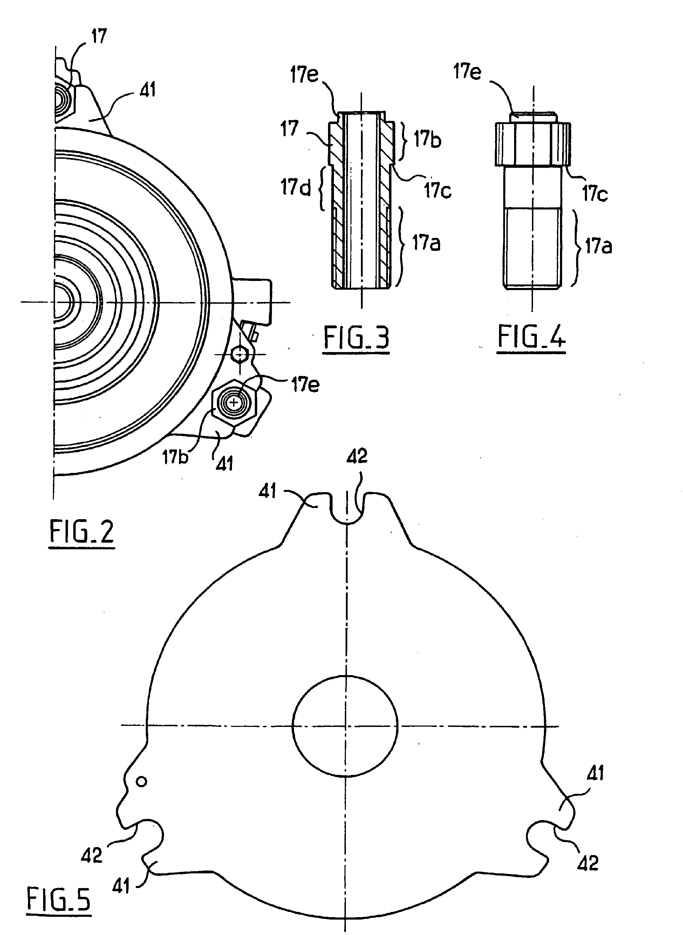

Comme on peut le voir sur la figure 3 notamment, les entretoises 17 sont creuses et il en est de même des entretoises 18, ce qui permet le passage de tiges 34 de fixation des freins 8 et 9 sur le châssis 2. Ces tiges 34 sont parallèles à l'axe X et sont vissées à une extrémité 35 sur le châssis 2 et reçoivent chacune à l'extrémité opposée 36 un écrou venant s'appliquer contre la face arrière 37 de la culasse 20 du deuxième frein 9. D'autres systèmes de fixation que les tiges 34 pourraient être utilisés.

Les entretoises 17 présentent une partie filetée 17a qui est vissée dans la culasse 19 et une tête hexagonale 17b qui définit un épaulement 17c. En vissant plus ou moins les entretoises 17, on peut agir sur l'entrefer du frein 8.

Les entretoises 17 présentent une partie intermédiaire 17d, cylindrique de révolution, lisse, s'étendant entre la tête 17b et la partie filetée 17a, qui sert au guidage de l'armature 15.

Conformément à un aspect de l'invention, les entretoises 17 comportent chacune une nervure annulaire 17e formant saillie au-delà de la tête hexagonale 17b, agencée pour s'engager dans un logement correspondant 40 du châssis 2, de manière à permettre la transmission au châssis 2 du couple de freinage exercé sur les freins 8 et 9.

Dans l'exemple de la figure 1, les entretoises 18 diffèrent des entretoises 17 seulement par l'absence de la nervure 17e.

Conformément à un autre aspect de l'invention, chaque armature 15 ou 16 comporte à sa périphérie, comme on peut le voir à la figure 5, trois fourchettes 41 disposées à 120° les unes des autres, présentant chacune une ouverture oblongue 42 pour le passage de l'entretoise 17 ou 18 correspondante, la largeur de chaque ouverture 42 correspondant sensiblement au diamètre extérieur de la portion intermédiaire cylindrique 17d.

Les ouvertures oblongues 42 débouchent, dans l'exemple illustré, radialement à l'extérieur de l'armature 15 ou 16 correspondante, ce qui permet un certain débattement dans le sens radial des entretoises 17 et 18 et facilite la fabrication et le montage des freins 8 et 9.

Les culasses 19 et 20 comportent des logements respectifs 46 et 47 pour le passage de l'arbre 3. Un bouchon 50 ferme le logement 47 de la culasse 20, ce qui permet de réduire les bruits de fonctionnement.

On ne sort pas du cadre de la présente invention lorsque les entretoises 18 du deuxième frein sont identiques à celles du premier et comportent en conséquence chacune, comme on l'a représenté de manière partielle et schématique à la figure 6, une extension formée par une nervure annulaire 18e venant s'engager dans un lamage correspondant 52 de la culasse 19 du premier frein 8, de façon à permettre une reprise du couple entre les deux freins 8 et 9 autrement que par friction et améliorer encore la sécurité de l'ensemble.

Bien entendu, l'invention n'est pas limitée aux exemples qui viennent d'être décrits.

En particulier, on peut donner aux entretoises des formes différentes et, le cas échéant, utiliser pour le système de freinage un nombre différent de freins.

Dans toute la description, y compris les revendications, l'expression « comportant un » doit être comprise comme étant synonyme de « comportant au moins un », sauf si le contraire est spécifié.

## Revendications

1. Système de freinage (1) pour moteur électrique, notamment d'entraînement d'un ascenseur, comportant:
- un châssis (2),
- au moins un frein (8) supporté par le châssis, ce frein comportant:
- au moins un disque de frein (11) relié par une liaison cannelée à un arbre (3) entraîné par le moteur,
- une armature (15) mobile en translation selon l'axe de rotation de l'arbre,
- des ressorts (29) pour solliciter l'armature contre le disque,
- un électroaimant (22) pour, lorsqu'alimenté, attirer l'armature et l'éloigner du disque contre l'action des ressorts,
le système de freinage étant **caractérisé en ce que**
des entretoises (17) de guidage de l'armature sont vissées dans une culasse du frein (8), les entretoises présentant une tête hexagonale (17b) définissant un épaulement (17c) et une nervure annulaire (17e) formant saillie au-delà de la tête hexagonale (17b), les entretoises (17) étant engagées à une extrémité par la nervure dans un logement correspondant (40) du châssis, de manière à permettre une reprise par le châssis du couple s'exerçant sur le frein lors du freinage.

2. Système selon la revendication 1, **caractérisé par le fait que** l'armature (15) comporte au moins une ouverture oblongue (42), allongée dans le sens radial, traversée par une entretoise (17) correspondante.

3. Système selon la revendication 2, **caractérisé par le fait que** l'ouverture oblongue (42) débouche à la circonférence de l'armature.

4. Système selon l'une quelconque des revendications précédentes, **caractérisé par le fait que** le frein (8) comporte trois entretoises (17) comportant chacune une extrémité (17e) engagée dans un logement correspondant (40) du châssis, de manière à permettre une reprise par le châssis (2) du couple s'exerçant sur le frein (8) lors du freinage.

5. Système selon l'une quelconque des revendications précédentes, **caractérisé par le fait que** le système de freinage comporte un deuxième frein (9) juxtaposé au premier (8), comportant un disque de frein (12) relié par une liaison cannelée à l'arbre (3) entraîné par le moteur, une armature (16) mobile en translation selon l'axe (X) de rotation de l'arbre, des entretoises (18) de guidage de l'armature, des ressorts (29) pour solliciter l'armature contre le disque et un électroaimant (23) pour, lorsqu'alimenté, attirer l'armature et l'éloigner du disque contre l'action des ressorts.

6. Système selon la revendication précédente, **caractérisé par le fait que** les entretoises (18) de ce deuxième frein sont engagées à une extrémité (18e) dans un logement correspondant (52) de la culasse (19) du premier frein, de façon à permettre une reprise par cette culasse du couple s'exerçant sur le deuxième frein lors du freinage.

7. Système selon l'une quelconque des deux revendications immédiatement précédentes, **caractérisé par le fait que** le système de freinage comporte des tiges filetées (34) traversant les entretoises (17, 18) et maintenant les deux freins (8, 9) en compression l'un contre l'autre.

8. Système selon la revendication précédente, **caractérisé par le fait que** les tiges filetées (34) se vissent à une extrémité (35) dans le châssis (2) et permettent le vissage à l'extrémité opposée (36) d'écrous venant prendre appui sur la culasse du deuxième frein.

9. Système selon l'une quelconque des revendications 5 à 8, **caractérisé par le fait que** la culasse (20) du deuxième frein comporte un logement (47) permettant de recevoir l'extrémité de l'arbre (3) entraîné par le moteur et **par le fait que** ce logement est obturé à une extrémité par un bouchon (50).

## Claims

1. A braking system for an electric motor, in particular for driving an elevator, the braking system comprising:
- a chassis; and
- at least one brake supported by the chassis, the brake comprising:
- at least one brake disk connected via a fluted connection to a shaft driven by the motor;
- an armature that is movable in translation along the axis of rotation of the shaft;
- springs for urging the armature against the disk; and
- an electromagnet which, when powered, serves to attract the armature and move it away from the disk against the action of the springs,
the braking system being **characterized by** the fact that armature-guiding spacers are screwed into a yoke of the brake, the spacers presenting an hexagonal head which define a shoulder and an annular lip projecting beyond the hexagonal head, the spacers being engaged at one end by the lip in a corresponding housing in the chassis, so as to enable the chassis to take up the torque that is exerted on the brake during braking.

2. A system according to claim 1, **characterized by** the fact that the armature includes at least one oblong opening that is elongate in the radial direction and that has a corresponding spacer passing therethrough.

3. A system according to claim 2, **characterized by** the fact that the oblong opening opens out into the circumference of the armature.

4. A system according to any one of the preceding claims, **characterized by** the fact that the brake includes three spacers each including one end engaged in a corresponding housing of the chassis, so as to enable the chassis to take up the torque that is exerted on the brake during braking.

5. A system according to any of the preceding claims, **characterized by** the fact that the braking system includes a second brake juxtaposed with the first brake, the second brake comprising a brake disk connected via a fluted connection to the shaft driven by the motor, an armature movable in translation along the axis of rotation of the shaft, armature-guiding spacers, springs for urging the armature against the disk, and an electromagnet which, when powered, serves to attract the armature and move it away from the disk against the action of the springs.

6. A system according to claim 5, **characterized by** the fact that each of the spacers of the second brake is engaged at one end in a corresponding housing of the yoke of the first brake, so as to enable said yoke to take up the torque that is exerted on the second brake during braking.

7. A system according to claim 5 and 6, **characterized by** the fact that the braking system includes threaded rods passing through the spacers and holding the two brakes in compression one against the other.

8. A system according to claim 7, **characterized by** the fact that the threaded rods are screwed at one end into the chassis and enable nuts to be screwed onto their opposite ends to bear against the yoke of the second brake.

9. A system according to claim 5 to 8, **characterized by** the fact that the yoke of the second brake includes a housing enabling the end of the shaft driven by the motor to be received, and by the fact that said housing is closed at one end by a plug.

## Patentansprüche

1. Bremssystem für Elektromotoren insbesondere Aufzugsantriebselektromotoren mit:
einem Gehäuse (2),
mindestens einer von dem Gehäuse getragenen Bremse (8) mit:
mindestens einer Bremsscheibe (11), die durch eine kannelierte Verbindung mit einer vom Motor angetriebenen Welle (3) verbundenen ist,
einer entlang der Wellenrotationsachse translatorisch beweglichen Armierung (15)
Federn (29), um die Armierung gegen die Scheibe zu drücken,
einem Elektromagneten (22), um, wenn gespeist, die Armierung anzuziehen und sie gegen die Federwirkung von der Scheibe wegzurücken,
wobei das Bremssystem **dadurch gekennzeichnet ist, dass** Abstandshalter (17) zur Führung der Armierung in ein Bodenstück der Bremse (8) geschraubt sind, wobei die Abstandshalter einen Sechskantkopf (27b) aufweisen, der einen Flansch (17c) und eine Ringrippe (17e), die über den Sechskantkopf hinaus (17b) herausstehend gebildet ist, definiert, wobei die Abstandshalter (17) sich an einem Ende über die Rippe in einem entsprechenden Unterbringungsabschnitt (40) des Gehäuses in Eingriff befinden, um so eine Wiederaufnahme des Drehmoments, das während des Bremsens auf die Bremse ausgeübt wird, durch das Gehäuse zu ermöglichen.

2. System nach Anspruch 1, **dadurch gekennzeichnet, dass** die Armierung (15) mindestens eine sich in radialer Richtung verlaufende, längliche Öffnung (42) enthält, die von einem entsprechendem Abstandshalter (17) durchquert wird.

3. System nach Anspruch 2, **dadurch gekennzeichnet, dass** die längliche Öffnung (42) an die Umrandung der Armierung mündet.

4. System nach einem der vorhergehenden Ansprüche, **dadurch gekennzeichnet, dass** die Bremse (8) drei Abstandshalter (17) mit jeweils einem Ende (17e) enthält, das sich mit einem entsprechenden Unterbringungsabschnitt (40) des Gehäuses in Eingriff befindet, um so eine Wiederaufnahme des Drehmoments, das während des Bremsens auf die Bremse (8) ausgeübt wird, durch das Gehäuse (2) zu ermöglichen.

5. Bremssystem nach einem der vorhergehenden Ansprüche **gekennzeichnet durch** eine neben die erste (8) gesetzte zweite Bremse (9) mit einer Bremsscheibe (12), die **durch** eine kannelierte Verbindung mit der vom Motor angetriebenen Welle (3) verbundenen ist, einer entlang der Wellenrotationsachse (X) translatorisch beweglichen Armierung (16), Abstandshaltern (18) der Führung der Armierung, Federn (29) zum Drücken der Armierung gegen die Scheibe und einem Elektromagneten (23), um bei Versorgung mit Strom die Armierung anzuziehen und sie gegen die Federwirkung von der Scheibe wegzurücken.

6. System nach einem der vorhergehenden Ansprüche**, dadurch gekennzeichnet, dass** sich die Abstandshalter (18) dieser zweiten Bremse an einem ein Ende (18e) mit einem entsprechenden Unterbringungsabschnitt (52) des Bodenstückes (19) der ersten Bremse in Eingriff befindet, um so eine Wiederaufnahme des Drehmoments, das während des Bremsens auf die Bremse ausgeübt wird, durch das Bodenstück zu ermöglichen.

7. System nach einem der zwei unmittelbar vorhergehenden Ansprüche, **dadurch gekennzeichnet, dass** das Bremssystem Gewindestangen (34) enthält, welche die Abstandshalter (17, 18) durchqueren und die beiden Bremsen (8, 9) in gegenseitigem Druck halten.

8. System nach dem vorhergehenden Anspruch, **dadurch gekennzeichnet dass,** die Gewindestangen (34) an einem Ende (35) in das Gehäuse (2) geschraubt werden und am gegenüberliegenden Ende (36) das Verschrauben von Muttern erlauben, die sich auf das Bodenstück der zweiten Bremse stützen.

9. System nach einem der Ansprüche 5 bis 8, **dadurch gekennzeichnet, dass** das Bodenstück (20) der zweiten Bremse einen Unterbringungsabschnitt (47) enthält, der die Aufnahme der vom Motor angetriebenen Welle (3) erlaubt, und dass der Unterbringungsabschnitt an einem Ende mit einem Verschluss (50) verschlossen ist.
